# EUROPÄISCHE PATENTSCHRIFT

(11) **EP 4 306 717 B1**
(45) Veröffentlichungstag und Bekanntmachung des Hinweises auf die Patenterteilung: **03.09.2025**
(21) Anmeldenummer: 22184913.6
(22) Anmeldetag: 14.07.2022
(51) Int. Cl.: E01C 19/48, B60H 1/00, B60H 1/24

(54) **STRASSENFERTIGER**
PAVER
FINISSEUSE DE ROUTES

(43) Veröffentlichungstag der Anmeldung: 17.01.2024
(73) Patentinhaber: Joseph Vögele AG, 67067 Ludwigshafen (DE)
(72) Erfinder: ERDTMANN, Bernhard, 68535 Edingen Neckarhausen (DE); WEBER, Stefan, 67127 Rödersheim-Gronau (DE); KESSLER, Helmut, 67663 Kaiserslautern (DE); PONTIUS, Johannes, 66839 Schmelz (DE); RIFFEL, Jan, 68307 Mannheim (DE)
(74) Vertreter: Grünecker Patent- und Rechtsanwälte PartG mbB

(56) Entgegenhaltungen:
- WO-A1-2021/252001
- DE-A1- 102017 001 202
- DE-A1- 102020 123 723
- KR-A- 20130 142 451

## Beschreibung

Die vorliegende Erfindung betrifft eine Straßenbaumaschine mit einer Frischlufteinrichtung gemäß dem Anspruch 1.

Es ist bekannt, dass an Straßenbaumaschinen, insbesondere an einem Straßenfertiger, zum Verlegen einer neuen Asphaltschicht, Absaugsysteme eingesetzt werden, die insbesondere aus einem vorderhalb der Einbaubohle positionierten Schneckenraum bei der darin stattfindenden Querverteilung des heißen Einbaumaterials entstehende Dämpfe absaugen und diese oberhalb des Fahrerbedienstands des Straßenfertigers ausstoßen. Ein solches Absaugsystem wird in EP 0 843 044 A1 offenbart.

Dämpfe werden von diesem Absaugsystem nur im Schneckenraum zwischen Maschinenrückwand und Bohlenvorderwand abgesaugt. Sobald die Bohle ausfährt, wird die Materialvorlage vor der Bohle auch mit "ausgezogen" und befindet sich nun neben der Maschine und somit außerhalb des vom Absaugsystem erfassten Bereichs. Somit gelangen Dämpfe in den Bereich eines Außenbedienstands der Einbaubohle, an welcher Stelle sich ein Bediener während des Einbaus der neuen Asphaltdecke aufhält.

Des Weiteren entstehen an Straßenfertigern auch im Bereich des Gutbunkers, in welchem das heiße Einbaumaterial bevorratet wird, Dämpfe, denen insbesondere ein Fahrer des Straßenfertigers ausgesetzt ist. Um diese Dämpfe abzusaugen, schlägt EP 0 843 044 A1 eine weitere Absaugeinrichtung vor. Auch diese Absaugeinrichtung stößt die aus dem Gutbunkerbereich abgesaugten Dämpfe oberhalb des Dachs aus. Jedoch kann es auch hier bei dieser Vorrichtung vorkommen, dass nicht sämtliche Dämpfe aus dem Gutbunker abgesaugt werden können, und somit ggf. ein Teil davon in den Bereich des Fahrerbedienstands hineinziehen kann, in welchem der Fahrer der Straßenbaumaschine positioniert ist.

DE 10 2020 123 723 A1 offenbart einen Straßenfertiger mit einem Bedienstand, der eine Luftdüseneinheit aufweist, die dazu ausgebildet ist, einen Luftschleier um den Bedienstand zu erzeugen. Die Luftdüseneinheit kann in einem Dach des Bedienstands integriert sein. Die Luftdüseneinheit soll vom Dach aus von oben nach unten entlang einer offenen Seite des Fahrerbedienstands eine Luftwand ausbilden.

Die vorangehend beschriebenen Absaug-/Gebläsesysteme rufen vor allem wegen ihrer integrierten Bauweise einen hohen Konstruktionsaufwand hervor. Insbesondere entstehen damit für verschiedene Maschinentypen unterschiedliche Absaug-/Gebläsesysteme. Baureihenübergreifend entstehen damit verschiedene Spezialanfertigungen, wodurch Herstellungskosten erhöht werden. CN 211 571 280 U offenbart einen Straßenfertiger, bei welchem am Dach des Fahrerbedienstands eine Frischlufteinrichtung befestigt ist. Diese Vorrichtung ist allerdings mit dem Nachteil verbunden, dass lediglich unterhalb des Dachs angesammelte verunreinigte Luft gereinigt werden kann, das heißt der darunter positionierte Bediener mit hoher Wahrscheinlichkeit in geringem Maße davon profitiert.

DE10 2017 001202 A1 offenbart eine Frischlufteinrichtung, die innerhalb und außerhalb eines Kraftfahrzeugs einsetzbar ist.

KR 2013 0142451 A offenbart eine schwenkbare Frischlufteinrichtung zur Befestigung auf einer Mittenkonsole eines Kraftfahrzeugs.

WO 2021/252001 A1 offenbart eine Frischlufteinrichtung zur Anbringung an einem Kinderwagen oder an einer Tischkante.

Aufgabe der Erfindung ist es, eine Straßenbaumaschine mit kostengünstig herstellbaren, vielseitig und wirkungsvoll einsetzbaren Mitteln zur Verbesserung der Luftqualität im Bereich des Bedienpersonals der Straßenbaumaschine zur Verfügung zu stellen.

Diese Aufgabe wird gelöst mittels einer Straßenbaumaschine gemäß Anspruch 1. Vorteilhafte Weiterbildungen der Erfindung sind durch die jeweiligen Gegenstände der Unteransprüche gegeben.

Die Erfindung bezieht sich auf eine Straßenbaumaschine, die in Form eines Straßenfertigers oder eines Beschickerfahrzeugs für einen Straßenfertiger konfiguriert ist. Die Straßenbaumaschine umfasst eine Frischlufteinrichtung für ein Fahrerbedienpult eines zumindest seitlich offen ausgebildeten Fahrerbedienstands der Straßenbaumaschine oder für eine Außenbedienkonsole der Straßenbaumaschine. Die erfindungsgemäße Frischlufteinrichtung umfasst mindestens eine Gebläseeinheit zum Erzeugen eines Luftstroms, mindestens eine Filtereinheit zum Filtern des mittels der Gebläseeinheit gebildeten Luftstroms und eine Luftausgabeeinheit, die mindestens eine Luftaustrittsöffnung für den gefilterten Luftstrom aufweist.

Erfindungsgemäß ist die Frischlufteinrichtung als ein zur lösbaren Anbringung am Fahrerbedienpult oder an der Außenbedienkonsole konfiguriertes, modulares Anbaugerät ausgebildet. Somit lässt sich die erfindungsgemäße Frischlufteinrichtung als eigenständige Funktionseinheit, das heißt unabhängig vom Betrieb eines in der Straßenbaumaschine integrierten, insbesondere zum Absaugen von Dämpfen aus dem Schneckenraum verwendeten Gebläses und/oder Saugaggregats zum Ausbilden des Frischluftstroms einsetzen. Gegenüber solchen bereits in der Straßenbaumaschine integrierten Gebläse- und/oder Saugaggregaten bildet die erfindungsgemäße Frischlufteinrichtung ein autarkes Anbaumodul aus, das problemlos vom Bediener auf der Baustelle, unabhängig vom vorliegenden Maschinentypen der Straßenbaumaschine, sprich baureihenübergreifend, am Fahrerbedienpult oder an der Außenbedienkonsole montiert werden kann. Dies bedeutet, dass die erfindungsgemäße Frischlufteinrichtung als autarkes Anbaumodul standardmäßig an verschiedenen Straßenbaumaschinen zum Einsatz kommen kann, sprich vielseitig einsetzbar ist, infolge dessen sich auch Herstellungskosten für verschiedene Baureihen reduzieren lassen.

Die erfindungsgemäße Frischlufteinrichtung bildet ein an verschiedenen Maschinentypen anbringbares Standard- sowie Nachrüstmodul aus, das trotz seines standardisierten, modularen Aufbaus ein hohes Potential für einen individuellen Einsatz an der Straßenbaumaschine hat. Insbesondere lässt sich die erfindungsgemäße Frischlufteinrichtung dank ihres modularen Aufbaus sowie ihrer autarken Funktionsweise individuell vom Bediener einstellen, ohne dass dieser dafür in der Maschine integrierte Aggregate verstellen muss. Im Grunde genommen ist es möglich, einen zwischen der erfindungsgemäßen Frischlufteinrichtung und anderen Maschinenaggregaten unabhängigen Betrieb einzurichten, sprich diese isoliert voneinander laufen zu lassen.

Ferner lässt sich die erfindungsgemäße Frischlufteinrichtung im Ganzen, d.h. als modulare Baugruppe, aufgrund deren lösbaren Befestigung mühelos von der Straßenbaumaschine abmontieren. Beispielsweise kann die Frischlufteinrichtung über Nacht, bei Transportfahrten, für Service- und/oder Reinigungszwecke mit wenigen Handgriffen abgebaut werden.

Die erfindungsgemäße Frischlufteinrichtung bildet vor allem als modulares Anbaugerät ein kompaktes Modul aus, das sich insgesamt an der Straßenbaumaschine in kompakter Bauweise gut sichtbar befestigen lässt, womit sich auch dessen Funktionsfähigkeit gut überprüfen lässt.

Dadurch, dass die erfindungsgemäße Frischlufteinrichtung lösbar am Fahrerbedienpult oder an der Außenbedienkonsole anbringbar ist, insbesondere direkt an einem vom Fahrer oder von einem Bediener genutzten Bedieneinheiten, wird die durch die Frischlufteinrichtung erzeugte Frischluft gezielt dort zur Verfügung gestellt, wo sie vom Fahrer oder Bediener gebraucht wird. Damit wird unmittelbar am Ort des Fahrers beziehungsweise Bedieners eine Verbesserung der Luftqualität geschaffen.

Vorzugsweise weist die Gebläseeinheit einen Radialventilator auf. Dieser kann Luft axial entlang seiner Motorachse ansaugen und bläst die Luft um 90° versetzt wieder aus. Ein solcher Radialventilator verfügt über einen hohen Wirkungsgrad und eignet sich vor allen Dingen für daran vor und/oder nachgelagerte Einheiten, die mit erhöhten Pressungen beziehungsweise Luftdrücken arbeiten, beispielsweise für einen vorgelagerten Filter. Außerdem eignet sich der Radialventilator für einen geräuscharmen Betrieb. Denkbar wäre es, dass die Gebläseeinheit anstelle des Radialventilators einen Axialventilator aufweist. Aufgrund dessen Funktionsweise, axial Luft anzusaugen und diese axial auszustoßen, bietet sich ein Potential für eine vorteilhafte, konstruktive Bauweise.

Eine Variante sieht vor, dass die Gebläseeinheit einen Elektromotor aufweist. Insbesondere einen drehzahlregelbaren Elektromotor. Der Motor könnte dafür mit einem eigenen Drehzahlsteuermodul ausgestattet sein, sodass sich ein eigenständiger Betrieb der Gebläseeinheit noch besser individuell einstellen lässt.

Gemäß einer Ausführungsform der Erfindung ist die Gebläseeinheit mit einer Stromversorgungsquelle der Straßenbaumaschine verbindbar. Denkbar wäre es, dass die Frischlufteinrichtung einen Netzstecker aufweist, der mit einer an der Straßenbaumaschine montierten Steckdose verbindbar ist, um die Gebläseeinheit mit Strom zu versorgen.

Vorzugsweise weist die Frischlufteinrichtung mindestens einen eigenen Akkumulator, beispielsweise einen Lithium-Ionen-Akkumulator, für einen Betrieb der Gebläseeinheit auf. In Sachen Stromversorgung wäre die Frischlufteinrichtung somit vollständig autark ausgebildet. Eine Variante sieht vor, dass sich der Akkumulator mittels der Stromversorgungsquelle der Straßenbaumaschine aufladen lässt.

Gemäß einer vorteilhaften Ausführungsform der Erfindung umfasst die Luftausgabeeinheit mindestens ein Bedienelement zum Einstellen einer Drehzahl der Gebläseeinheit. Denkbar wäre es, dass zumindest eine Funktion der Frischlufteinrichtung, insbesondere die Drehzahl der Gebläseeinheit, an einer Bedienoberfläche des Fahrerbedienpults oder an einer Bedienoberfläche der Außenbedienkonsole, beispielsweise über eine zwischen der Frischlufteinrichtung und dem Fahrerbedienpult oder der Außenbedienkonsole herstellbare W-LAN, Ethernet- und/oder Bluetooth-Verbindung ansteuerbar ist.

Es wäre in diesem Zusammenhang möglich, dass in Abhängigkeit eines oder mehrerer gemessener Prozesswerte während des Betriebs der Straßenbaumaschine eine dynamische Drehzahlregelung des Elektromotors der Gebläseeinheit geschieht. Diese Funktion kann beispielsweise mittels der Bedienoberfläche des Fahrerbedienpults oder mittels der Bedienoberfläche der Außenbedienkonsole aufgerufen werden. Die dynamische Drehzahlregelung könnte jedoch auch direkt an der Frischlufteinrichtung aufrufbar sein.

Eine einfache Variante sieht vor, dass mindestens zwei Leistungsstufen für den Betrieb der Gebläseeinheit direkt an der Frischlufteinrichtung aktivierbar sind. Vorstellbar wäre es, die Frischlufteinrichtung gleich mit einem eigenen Bedienmodul auszustatten. Dieses Bedienmodul könnte ein Display zur Anzeige von eingestellten Betriebsparametern der Frischlufteinrichtung umfassen, wobei das Display gemäß einer besonderen Ausführungsform als Touch-Display zum Ansteuern und/oder Überwachen eines Betriebs der Frischlufteinrichtung konfiguriert ist.

Gemäß einer Ausführungsform könnte ein Fahrer beziehungsweise ein Bediener die Frischlufteinrichtung mittels einer mobilen Einheit ansteuern, beispielsweise mittels eines Smart-Devices. Das Smart-Device kann in Form eines Smartphones, Tablet-PCs, Wearables und/oder einer Datenbrille ausgebildet sein.

Gemäß einer Ausführungsform der Erfindung ist die Frischlufteinrichtung für einen vernetzten Betrieb mit mindestens einem anderen an der Straßenbaumaschine angebrachten Anbaumodul, beispielsweise mit einem Thermographiemodul und/oder einem Wettermodul konfiguriert. Insbesondere wäre es möglich, dass die Drehzahlregelung der Gebläseeinheit in Abhängigkeit mindestens eines an dem anderen Anbaumodul gemessenen Prozesswerts geschieht. Beispielsweise kann eine Temperatur des Frischluftstroms in Abhängigkeit einer anhand des Wettermoduls gemessenen Umgebungstemperatur der Straßenbaumaschine dynamisch angepasst werden. Dafür könnte ein in der Frischlufteinrichtung integriertes Heiz-/Kühlelement verwendet werden.

Gemäß einer Variante der Erfindung ist die Filtereinheit der Gebläseeinheit in Strömungsrichtung vorgelagert positioniert. Damit wird die mittels der Gebläseeinheit angesaugte Luft gereinigt, bevor sie die Gebläseeinheit passiert, wodurch sich die Gebläseeinheit besser vor Verunreinigungen schützen lässt. Diese Variante eignet sich insbesondere zusammen mit der Verwendung eines Radialventilators, weil sich die Filtereinheit zum Einen gut in dessen axialen Luftströmung integrieren lässt und zum Anderen auch eine hohe Filtration möglich ist. Alternativ wäre es auch denkbar, die Filtereinheit oder eine weitere Filtereinheit der Gebläseeinheit in Strömungsrichtung nachgelagert zu positionieren. Eine solche Variante käme vor allen Dingen dann infrage, wenn die Gebläseeinheit als Axialventilator konfiguriert ist.

Denkbar wäre eine Variante, bei welcher die Gebläseeinheit zwischen mindestens einer vorgelagerten, als Grobfilter ausgebildeten Filtereinheit und mindestens einer nachgelagerten, als Feinfilter ausgebildeten Filtereinheit positioniert ist. Damit lassen sich gleich mehrere positive Effekte auf einmal erzielen. Der oder die vorgelagerten Grobfilter sorgen nämlich für einen schonenden Betrieb der Gebläseeinheit und der oder die nachgelagerten Feinfilter sorgen für eine optimale Luftqualität.

Vorzugsweise weist die Filtereinheit ein Filtergehäuse zur Aufnahme mindestens eines austauschbaren Filterelements auf. Generell wäre es denkbar, die Frischlufteinrichtung mit einem Betriebsstundenzähler auszustatten oder zumindest funktional mit einem solchen zu verbinden, wobei in Abhängigkeit eines damit erreichten Betriebsstundenstands ein Bediener beziehungsweise Fahrer zu Service- beziehungsweise Reinigungsintervallen aufforderbar ist, beispielsweise zum Austausch des im Filtergehäuse verbauten Filterelements durch ein Neues.

Gemäß einer Variante der Erfindung ist das Filterelement ein Aktivkohlefilter. Vorzugsweise sind zwei als Aktivkohlefilter ausgebildete Filterelemente hintereinander im Filtergehäuse positioniert. Damit lassen sich besonders wirksam bitumenhaltige Dämpfe aus der Luft herausfiltern. Denkbar wäre eine Anordnung, bei welcher in Reihe zwei als Aktivkohlefilter ausgebildete Filterelemente der Gebläseeinheit vorgelagert und mindestens ein weiteres als Aktivkohlefilter ausgebildetes Filterelement der Gebläseeinheit nachgelagert sind.

Vorteilhaft wäre es, wenn die Filtereinheit für das Filtergehäuse mindestens eine Gehäuseausbaustufe vorsieht, mittels welcher mindestens ein weiteres Filterelement, beispielsweise ein Aktivkohlefilter, aufnehmbar ist. Damit wäre es möglich, ein Gehäusevolumen zu schaffen, in welchem mehrere Filterelemente aufgenommen werden können. Vorzugsweise sind die Filterelemente innerhalb des erweiterten Filtergehäuses in Strömungsrichtung hintereinander, in Reihe positioniert. Damit lassen sich Verunreinigungen noch besser aus der angesaugten Luft herausfiltern. Die hintereinander angeordneten Filterelemente können sogar verschiedene Filtereigenschaften aufweisen, insbesondere feiner werdende Filtrationsstufen ausbilden.

Insbesondere könnte die Gehäuseausbaustufe dazu konfiguriert sein, außer des oder der weiteren Filterelemente auch wenigstens eine andere Vorbaueinheit bzw. Vorbaukomponente aufzunehmen, beispielsweise einen Staubschutz und/oder ein Schutzgitter.

Denkbar wäre es, dass das Filtergehäuse, einschließlich der dafür gegebenenfalls vorgesehenen Gehäuseausbaustufe, im Wesentlichen aus Kunststoff hergestellt sind. Dies kommt einer Leichtbauweise zugute. Insbesondere kann das Filtergehäuse aus mehreren Kunststoffschalen zusammengebaut sein.

Gemäß einer Variante ist das Filtergehäuse, insbesondere zusammen mit der daran anbaubaren Gehäuseausbaustufe, werkzeuglos, beispielsweise unter Einsatz von Schnellverschlüssen, zusammenbaubar. Ein Austausch des oder der darin aufgenommenen Filterelemente kann somit mühelos vor Ort, sprich mit wenigen Handgriffen auf der Baustelle, vom Fahrer beziehungsweise Bediener durchgeführt werden.

Vorzugsweise weist die Luftausgabeeinheit eine Montageplatte auf, an welcher die Gebläseeinheit und/oder die Filtereinheit befestigt ist. Die Gebläseeinheit und die Filtereinheit können auf entgegengesetzten Seiten der Montageplatte angeordnet sein. Die Montageplatte bildet für die Gebläseeinheit und/oder die Filtereinheit eine stabile Befestigungsbasis aus, an welcher befestigt sich die Gebläseeinheit und die Filtereinheit insbesondere zueinander stabil ausrichten lassen.

Eine besonders bevorzugte Variante sieht vor, dass die Luftausgabeeinheit zur lösbaren Anbringung der Frischlufteinrichtung am Fahrerbedienpult oder an der Außenbedienkonsole eine erste Halterung aufweist, die zusammen mit der Montageplatte auch zur Ausbildung eines Lüftergehäuses für die Gebläseeinheit vorgesehen ist. Die erste Halterung erfüllt somit eine Doppelfunktion, da sie sowohl zum lösbaren Befestigen der Frischlufteinrichtung dient als auch zur Ausbildung des Lüftergehäuses innerhalb der Luftausgabeeinheit eingesetzt wird. Für deren eigentliche Befestigungsfunktion weist die erste Halterung einen ersten Abschnitt auf, der aus der Luftausgabeeinheit herausragt. Für ihre Gehäusefunktion, sprich zur Ausbildung des Lüftergehäuses, weist die erste Halterung einen zweiten Abschnitt auf, der innerhalb der Luftausgabeeinheit positioniert ist, um darin an der Montageplatte, zu dieser beabstandet befestigt zu werden. Damit ergibt sich ein sehr stabiler Aufbau, sodass selbst eine Gebläseeinheit mit hoher Drehzahl stabil an dem Fahrerbedienpult oder an der Außenbedienkonsole befestigt werden kann.

Gemäß einer Ausführungsform der Erfindung ist die erste Halterung mit einer am Fahrerbedienpult oder an der Außenbedienkonsole befestigbaren zweiten Halterung lösbar verbunden. Die zweite Halterung kann selbst lösbar am Fahrerbedienpult oder an der Außenbedienkonsole befestigt werden. Insbesondere weist die zweite Halterung einen oberen Abschnitt auf, der mit dem außenliegenden Abschnitt der ersten Halterung verbunden ist, beispielsweise mit diesem verschraubt ist. Der obere Abschnitt der zweiten Halterung kann durch eine Stufenform mit einem unteren Abschnitt der zweiten Halterung verbunden sein, ist insbesondere integral über die Stufenform mit diesem ausgebildet. Der untere Abschnitt der zweiten Halterung weist einen Aufnahmesockel auf, anhand dessen sich die zweite Halterung am Unterbau des Fahrerbedienpults oder am Unterbau der Außenbedienkonsole befestigen lässt.

Vorteilhaft ist es, wenn eine zwischen der ersten Halterung und der zweiten Halterung gebildete Verbindungsstelle oberhalb des Fahrerbedienpults oder der Außenbedienkonsole, für einen Bediener frei zugänglich gelagert ist. In anderen Worten liegt bei dieser Variante die Koppelstelle, an welcher der außenliegende Abschnitt der ersten Halterung mit dem oberen Abschnitt der zweiten Halterung verbunden ist, derart oberhalb des Fahrerbedienpults oder des Außenbedienstands, dass ein Fahrer beziehungsweise Bediener die Koppelstelle gut mit Werkzeug, beispielsweise mit einem Schraubenschlüssel, erreichen kann, um die Frischlufteinrichtung am Fahrerbedienpult oder an der Außenbedienkonsole zu montieren oder davon abzubauen.

Besonders praxistauglich ist es, wenn der mittels der Gebläseeinheit durch die Filtereinheit angesaugte Luftstrom von der Gebläseeinheit als gefilterter Frischluftstrom auf mindestens zwei, innerhalb der Luftausgabeeinheit ausgebildete Strömungskanäle verteilbar ist. Über diese kann die Frischluft zu unterschiedlichen Stellen des Fahrerbedienpults beziehungsweise der Außenbedienkonsole transportiert werden und aus der Luftausgabeeinheit ausströmen, um die Luftqualität in diesen Bereich für einen Fahrer beziehungsweise für einen Bediener zu verbessern.

Denkbar wäre es, dass der mittels der Gebläseeinheit durch die Filtereinheit angesaugte Luftstrom von der Gebläseeinheit als gefilterter Frischluftstrom durch einen einzigen mit der Gebläseeinheit verbundenen Strömungskanal zur Austrittsöffnung weitergeleitetet wird.

Eine Variante sieht vor, dass die Frischlufteinrichtung gleich mehrere Gebläseeinheiten aufweist, für welche jeweils ein Strömungskanal gesondert ausgebildet ist. In anderen Worten wird bei dieser Variante der von jeder Gebläseeinheit ausgestoßene Luftstrom nicht aufgeteilt, sondern komplett über einen mit der Gebläseeinheit verbundenen Strömungseinheit weitertransportiert.

Um eine vorteilhafte Verteilung der Frischluft am Fahrerbedienpult oder am Außenbedienstand zu bekommen, können die Strömungskanäle insbesondere in entgegengesetzten Richtungen Frischluft transportieren, um diese an außenliegenden Enden durch daran ausgebildete Austrittsöffnungen auszustoßen.

Eine besonders vorteilhafte konstruktive Bauweise ergibt sich dadurch, dass der innenliegende Abschnitt der ersten Halterung zumindest abschnittsweise zur Ausbildung der beiden Strömungskanäle dient. Damit ließe sich die erste Halterung besonders vielseitig an der Frischlufteinrichtung einsetzen.

Vorzugsweise umfasst die Luftausgabeeinheit zum Bedecken der Strömungskanäle eine Abdeckung. Es ist möglich, dass die Abdeckung zusammen mit anderen den Strömungskanal oder die Strömungskanäle ausbildenden Komponenten, beispielsweise mit dem innenliegenden Abschnitt der ersten Halterung, einen Hohlraum einschließt, in welchem gegebenenfalls elektronische Komponenten aufgenommen sind. Dies ermöglicht es, dass die elektronischen Komponenten von der Frischluftströmung isoliert gelagert sind, das heißt von diesem weitestgehend unbeeinflusst bleiben. Nichtsdestotrotz wäre es möglich, den erzeugten Frischluftstrom derart innerhalb der Luftausgabeeinheit zu führen, dass sich damit die im Hohlraum positionierten elektronischen Bauteile kühlen lassen.

Eine Ausführungsform der Erfindung sieht vor, dass die jeweilige Luftaustrittsöffnung verstellbare Lamellen aufweist. Damit lässt sich die Strömungsrichtung des Frischluftstroms vom Fahrer beziehungsweise vom Bediener einstellen. Die Lamellen könnten auch gemäß einer Ausführungsvariante zum Einstellen eines Luftvolumenstroms konfiguriert sein.

Zweckmäßig wäre es, wenn die Frischlufteinrichtung derart am Fahrerbedienpult oder an der Außenbedienkonsole montiert ist, dass die daran ausgebildete Luftaustrittsöffnung neben einer Bedienoberfläche des Fahrerbedienpults oder der Außenbedienkonsole positioniert ist. Dies sorgt zumindest optisch für eine integrale Bauweise, sodass sich insgesamt aus dem Fahrerbedienpult und der daran montierten Frischlufteinrichtung oder aus der Außenbedienkonsole mit daran montierter Frischlufteinrichtung ein optisch ineinander übergehender Aufbau ergibt.

Gemäß einer Variante der Erfindung ist die Frischlufteinrichtung für einen werkzeuglosen An- und Abbau konfiguriert. Beispielsweise bildet der außenliegende Abschnitt der ersten Halterung zusammen mit dem oberen Abschnitt der zweiten Halterung einen Schnellverschluss aus, liegt beispielsweise als Kniehebel, Bajonett- oder Magnetverschluss vor. Denkbar wäre auch eine Kombination aus Form- und Kraftschlussverbindung, um eine Schnellverschlusshalterung zur Verfügung zu stellen.

Insbesondere ist die Frischlufteinrichtung zum Erzeugen eines temperierbaren Frischluftstroms ausgebildet. In den jeweiligen Strömungskanälen kann dafür mindestens ein Heiz- und/oder Kühlelement angeordnet sein, das den Frischluftstrom auf eine gewünschte Temperatur bringt, bevor dieser die Luftausgabeeinheit verlässt. Zweckmäßig wäre es in diesem Zusammenhang, dass in den jeweiligen Strömungskanälen mindestens ein Peltier-Element vorgesehen ist, um den darin geförderten Frischluftstrom auf eine gewünschte Temperatur zu bringen. Vorstellbar wäre es, dass sich die jeweiligen Peltier-Elemente auf Basis eines an der Straßenbaumaschine erfassten Prozessparameters dynamisch regeln lassen, beispielsweise den Frischluftstrom in Abhängigkeit einer erfassten Umgebungstemperatur der Straßenbaumaschine auf ein gewünschtes Temperaturniveau regeln.

Insbesondere kann die lösbare Anbringung der erfindungsgemäßen Frischlufteinrichtung am Fahrerbedienpult oder an der Außenbedienkonsole derart gestalten sein, dass die Frischlufteinrichtung mit einer Verstellung des Fahrerbedienpults, beispielsweise wenn das Fahrerbedienpult quer zur Fahrtrichtung der Straßenbaumaschine verschoben wird, gemeinsam mit diesem verfährt, sprich eine Bewegung des Fahrerbedienpults oder der Außenbedienkonsole mitgeht, um den Fahrer oder Bediener immer mit Frischluft versorgen zu können. Insbesondere ist es möglich, dass die am Fahrerbedienpult oder an der Außenbedienkonsole befestigte Frischlufteinrichtung gemeinsam mit dem Fahrerbedienpult oder der Außenbedienkonsole schwenk-, kipp- und/oder verschiebbar ist, das heißt die Frischlufteinrichtung von der konstruktiven Lagerung des Fahrerbedienpults oder der Außenbedienkonsole profitiert.

Die Erfindung bezieht sich auf eine Straßenbaumaschine, die in Form eines Straßenfertigers oder eines Beschickerfahrzeugs für einen Straßenfertiger konfiguriert ist, wobei an der Straßenbaumaschine mindestens eine Frischlufteinrichtung als modulares Anbaugerät lösbar befestigt ist. Die Frischlufteinrichtung liegt als Anbausatz vor und lässt sich insbesondere baureihenübergreifend an verschiedenen Straßenfertiger- sowie Beschickerfahrzeugtypen montieren.

Vorzugsweise umfasst die Straßenbaumaschine einen zumindest seitlich offen ausgebildeten Fahrerbedienstand, sprich keinen geschlossen ausgebildeten Kabinenaufbau. Eine Variante sieht vor, dass die Frischlufteinrichtung am Fahrerbedienpult des offen konfigurierten Fahrerbedienstands und/oder an einem Außenbedienstand der Straßenbaumaschine befestigt ist. Die Frischlufteinrichtung kommt somit an der Straßenbaumaschine an einer von der Umgebung nicht isolierten Stelle zum Einsatz. Die Frischlufteinrichtung trägt daher an der Straßenbaumaschine dazu bei, den durch die Umgebungsluft ohnehin belüftbaren Arbeitsplatz, d.h. den Fahrerbedienstand oder den Außenbedienstand, zusätzlich mit Frischluft zu versorgen.

Ausführungsformen der Erfindung werden anhand der folgenden Figurenbeispiele genauer erläutert. Es zeigen:
- Figur 1: eine als Straßenfertiger konfigurierte Straßenbaumaschine,
- Figur 2: eine Außenbedienkonsole eines am Straßenfertiger aus Figur 1 vorliegenden Außenbedienstands der Einbaubohle in isolierter Darstellung,
- Figur 3: eine als Beschickerfahrzeug konfigurierte Straßenbaumaschine in perspektivischer Darstellung,
- Figur 4: ein Fahrerbedienpult in isolierter Darstellung mit daran lösbar befestigter Frischlufteinrichtung,
- Figur 5: der Zusammenbau aus Figur 4 in perspektivischer Darstellung von hinten
- Figur 6: eine Seitenansicht des Fahrerbedienpults mit daran befestigter Frischlufteinrichtung,
- Figur 7: die Frischlufteinrichtung in isolierter Darstellung,
- Figur 8: die Frischlufteinrichtung aus Figur 7 ohne Abdeckung,
- Figur 9: die Frischlufteinrichtung isoliert, in perspektivischer Darstellung von hinten,
- Figur 10: eine Seitenansicht der Frischlufteinrichtung,
- Figur 11: eine Schnittdarstellung durch die Frischlufteinrichtung,
- Figur 12: eine Außenbedienkonsole gemäß Figur 2 mit daran befestigter Frischlufteinrichtung aus einer ersten Perspektive, und
- Figur 13: die Außenbedienkonsole mit daran befestigter Frischlufteinrichtung aus einer Rückansicht.

Gleiche technische Komponenten sind in den Figuren durchgängig mit denselben Bezugszeichen versehen.

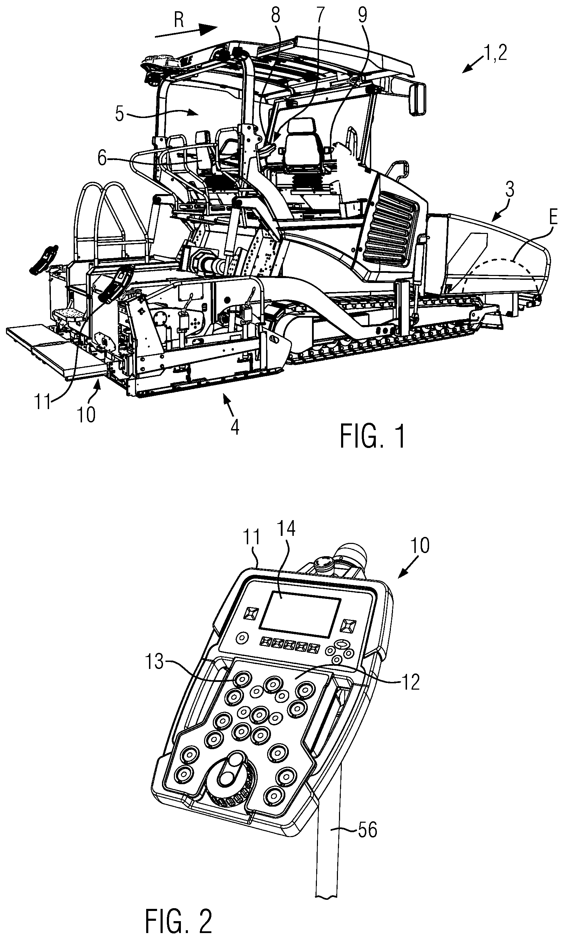

Figur 1 zeigt eine Straßenbaumaschine 1 die als Straßenfertiger 2 vorliegt. Der Straßenfertiger 2 verfügt über einen Gutbunker 3, in welchem bituminöses Einbaumaterial E bevorratet werden kann, das mittels einer vom Straßenfertiger 2 geschleppten Einbaubohle 4 zu einem neuen Straßenbelag verarbeitet werden kann. Während der Straßenfertiger 2 zum Verbau des neuen Straßenbelags in Fahrtrichtung R fährt, wird das Einbaumaterial E mittels einer in Figur 1 nicht gezeigten Längsfördereinrichtung aus dem Gutbunker 3 heraus, entgegen der Fahrrichtung R zu einer ferner nicht gezeigten, Querverteilerschnecke transportiert, welche das Einbaumaterial E vor der Einbaubohle 4 ausbreitet.

Der Straßenfertiger 2 umfasst einen offen ausgebildeten Fahrerbedienstand 5, auf welchem ein Fahrersitz 6 für einen Fahrer des Straßenfertigers 2 positioniert ist. In Fahrtrichtung R vor dem Fahrersitz 6 ist ein Fahrerbedienpult 7 gelagert. Das Fahrerbedienpult 7 bietet dem Fahrer eine Bedienoberfläche 8, anhand welcher der Fahrer den Betrieb des Straßenfertigers 2 steuern, insbesondere daran ablaufende Prozesse steuern und/oder überwachen kann. Das in Figur 1 gezeigte Fahrerbedienpult 7 kann entlang einer Führungsbahn 9 quer zur Fahrtrichtung R verstellt werden. Dafür bildet das Fahrerbedienpult 7 einen geeigneten Schlitten aus, welcher sich auf der Führungsbahn 9 verschieben und entlang dieser an einer gewünschten Position für den Fahrer fixieren lässt.

Ferner zeigt Figur 1, dass an außenliegenden Seiten der Einbaubohle 4 jeweils ein Außenbedienstand 10 ausgebildet ist. Am Außenbedienstand 10 ist eine Außenbedienkonsole 11 befestigt, anhand welcher ein neben der Einbaubohle 4 mitlaufender Bediener den Betrieb der Einbaubohle 4 steuern und/oder überwachen kann. Insbesondere lässt sich mittels der Außenbedienkonsole 11 ein Betrieb der in der Einbaubohle 4 verbauten Aggregate, beispielsweise Einstellungen darin arbeitender Verdichtereinheiten und/oder Heizeinrichtungen kontrollieren.

Figur 2 zeigt die Außenbedienkonsole 11 in isolierter Darstellung. Die Außenbedienkonsole 11 aus Figur 2 verfügt über eine Bedienoberfläche 12 mit mehreren Tastern 13 sowie einem Display 14 zur Anzeige von an der Einbaubohle 4 eingestellten Prozessparametern.

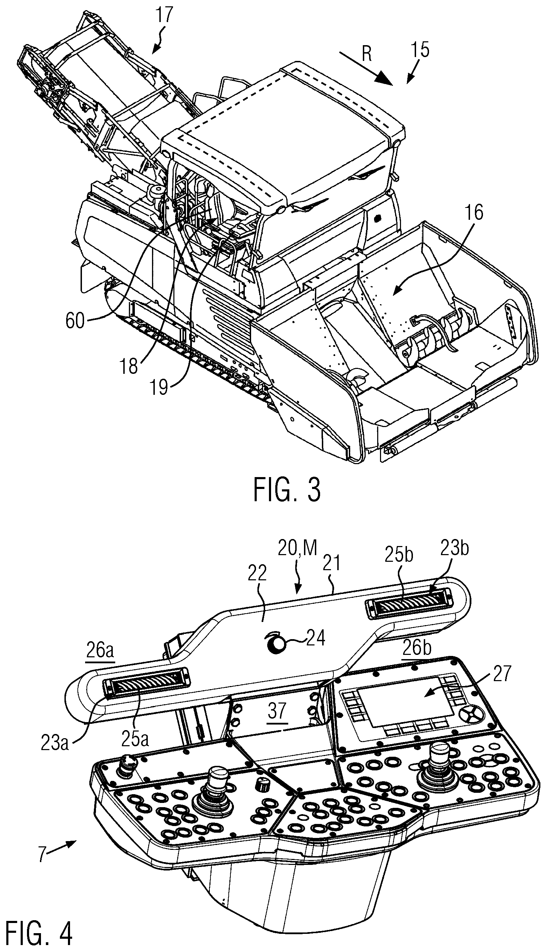

Figur 3 zeigt ein Beschickerfahrzeug 15. Ein solches Beschickerfahrzeug 15 kann während der Herstellung einer neuen Einbauschicht vor dem in Figur 1 gezeigten Straßenfertiger 2 herfahren und diesen mit Einbaumaterial E versorgen. Das Beschickerfahrzeug 15 verfügt über einen Gutbunker 16, aus welchem heraus mittels einer Längsfördereinrichtung 17 das Einbaumaterial E in den Gutbunker 3 des in Fahrtrichtung R hinterherfahrenden Straßenfertigers 2 transportiert werden kann.

Das Beschickerfahrzeug 15 weist einen offen ausgebildeten Fahrerbedienstand 18 auf, auf welchem ein Fahrersitz 60 sowie ein in Fahrtrichtung R vor dem Fahrersitz 60 gelagerter Fahrerbedienpult 19 vorgesehen ist. Der Fahrerbedienpult 19 kann in etwa die konstruktive Dimensionierung des Fahrerbedienpults 7 des Straßenfertigers 2 aus Figur 1 haben. Eine am Fahrerbedienpult 19 vorgesehene Bedienoberfläche ist natürlich hinsichtlich der Funktionen des Beschickerfahrzeugs 15 konfiguriert.

Figur 4 zeigt in isolierter Darstellung den Fahrerbedienpult 7 des Straßenfertigers 2 mit einer daran lösbar angebauten Frischlufteinrichtung 20. Anstelle des Fahrerbedienpults 7 könnte als Befestigungsort zur lösbaren Anbringung der Frischlufteinrichtung 20 auch der Fahrerbedienpult 19 vom Beschickerfahrzeug 15 eingesetzt werden. Außerdem käme als Befestigungsort zur lösbaren Anbringung der Frischlufteinrichtung 20 auch die Außenbedienkonsole 11 aus Figur 2 in Frage. Die Frischlufteinrichtung 20 hat dann ggf. eine für die Außenbedienkonsole 11 angepasste konstruktive Bauweise.

Die Frischlufteinrichtung 20 liegt in Figur 4 als modulares Anbaugerät M zur lösbaren Befestigung am Fahrerbedienpult 7 vor, sprich ließe sich auch vom Fahrerbedienpult 7 mühelos abbauen, ohne dadurch die Funktionsfähigkeit des Fahrerbedienpults 7 zu beeinflussen.

Die Frischlufteinrichtung 20 aus Figur 4 umfasst eine Luftausgabeeinheit 21 mit einer Abdeckung 22. Die Luftausgabeeinheit 21 verfügt über zwei Luftaustrittsöffnungen 23a, 23b, durch welche Frischluft in den Bereich des Fahrers, der vor dem Fahrerbedienpult 7 positioniert ist, strömt. Die Stärke eines zur Verfügung gestellten Frischluftstroms aus den Luftaustrittsöffnungen 23a, 23b lässt sich mittels eines in der Abdeckung 22 ausgebildeten Bedienelements 24 einstellen. Ferner zeigt Figur 4, dass die Luftaustrittsöffnungen 23a, 23b jeweils Lamellen 25a, 25b aufweisen, die zur Verstellung einer Strömungsrichtung der Frischluft dienen. Ggf. könnten die Lamellen 25a, 25b dazu ausgebildet sein, einen durch die Luftaustrittsöffnungen 23a, 23b gebildeten Luftvolumenstrom einzustellen.

In Figur 4 wird gezeigt, dass die Abdeckung 22 der Luftausgabeeinheit 21 oberhalb der Luftaustrittsöffnung 23a eine Aussparung 26a und unterhalb der Luftaustrittsöffnung 23b eine weitere Aussparung 26b ausbildet. Die jeweiligen Aussparungen 26a, 26b sorgen für eine kompakte Bauweise der Luftausgabeeinheit 21. Insbesondere ermöglicht es die Aussparung 26b, dass der Fahrer eine gute Sicht auf das darunter, am Fahrerbedienpult 7 ausgebildete Display 27 hat, um daran eingestellte Prozessparameter der Straßenbaumaschine 1 überwachen zu können. Die Aussparung 26a führt dazu, dass der Fahrer besser über die Luftausgabeeinheit 20 hinwegblicken kann, beispielsweise um einen Materialfüllstand im Gutbunker 3 des Straßenfertigers 2 zu überwachen.

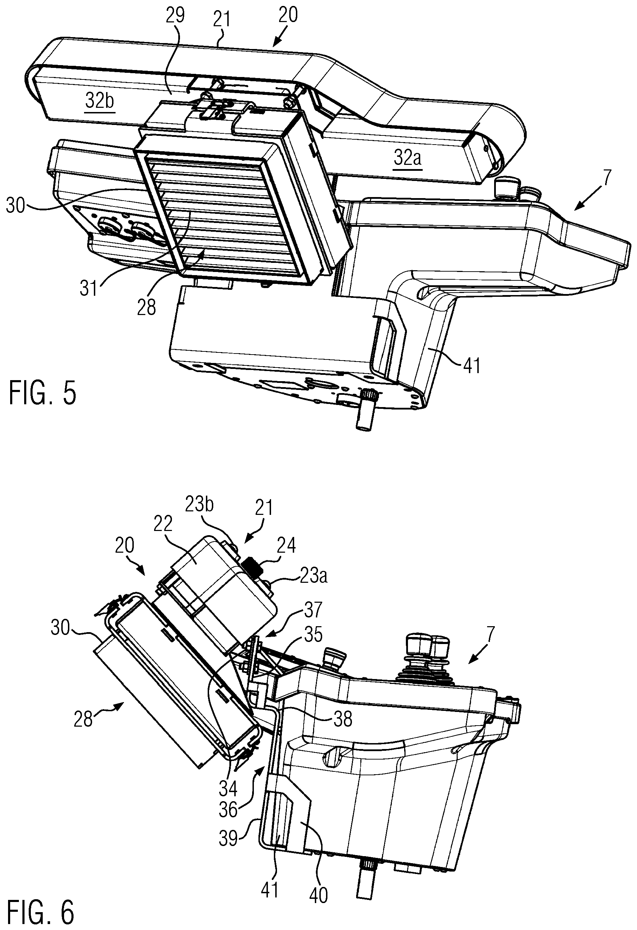

Figur 5 zeigt den in Figur 4 dargestellten Anbau der modularen Frischlufteinrichtung 20 am Fahrerbedienpult 7 aus einer hinteren Perspektive. Die Frischlufteinrichtung 20 aus Figur 5 besitzt eine Filtereinheit 28, die auf der Rückseite der Luftausgabeeinheit 21 an einer daran positionierten Montageplatte 29 befestigt ist. Die Filtereinheit 28 verfügt über ein Filtergehäuse 30, in welchem ein Filterelement 31 aufgenommen ist. Ferner zeigt Figur 5, dass die Montageplatte 29 seitliche Vorsprünge 32a, 32b ausbildet.

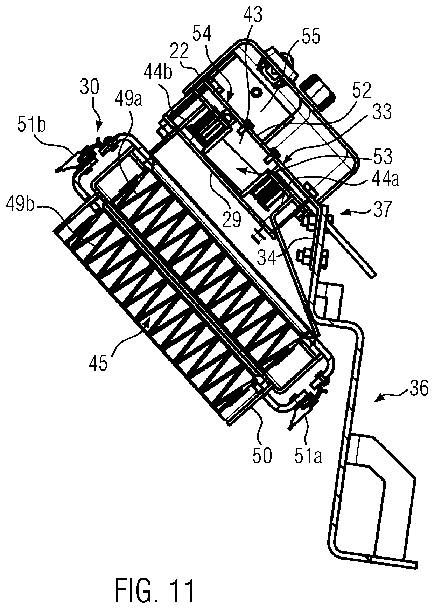

Figur 6 zeigt eine Seitenansicht des modularen Zusammenbaus aus Figur 5. Die Luftausgabeeinheit 21 weist eine erste Halterung 33 (siehe Figur 11) mit einem außenliegenden Abschnitt 34 auf, der an einen oberen Abschnitt 35 einer zweiten Halterung 36 angeschraubt ist. Eine zwischen dem außenliegenden Abschnitt 34 der ersten Halterung 33 und dem oberen Abschnitt 35 der zweiten Halterung 36 gebildete Verbindungsstelle 37 liegt, wie insbesondere auch in Figur 4 zu sehen ist, oberhalb des Fahrerbedienpults 7, frei für den Fahrer zugänglich, sodass dieser mühelos die Frischlufteinrichtung 20 am Fahrerbedienpult 7 anbauen beziehungsweise davon abbauen kann. Die zweite Halterung 36 kann am Fahrerbedienpult 7 verbleiben oder ebenfalls vom Fahrerbedienpult 7 abgebaut werden.

Ferner zeigt Figur 6, dass der obere Abschnitt 35 der zweiten Halterung 36 mittels einer Stufenform 38 mit einem unteren Abschnitt 39 verbunden ist. Der obere Abschnitt 35, die Stufenform 38 und der untere Abschnitt 39 können als integral hergestelltes Formbauteil vorliegen, beispielsweise aus einem Blechrohling gebogen werden. Am unteren Abschnitt 39 ist ein Aufnahmesockel 40 ausgebildet, der entsprechend einer konstruktiven Bauweise eines am Fahrerbedienpults 7 gebildeten Unterbaus 41 vorliegt, um daran formschlüssig angebaut zu werden.

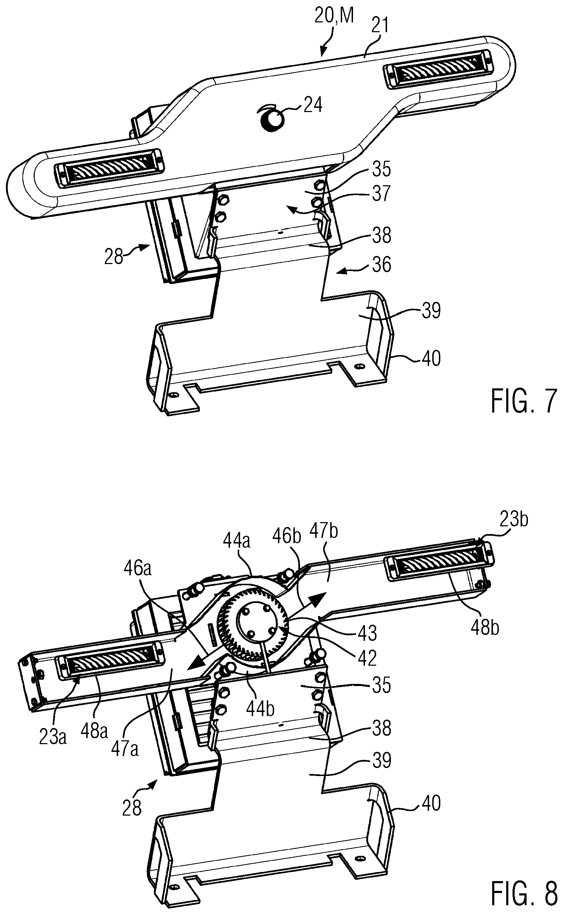

Figur 7 zeigt die Frischlufteinrichtung 20 einschließlich der daran befestigten zweiten Halterung 36 in isolierter Darstellung. In dieser Konfiguration oder alternativ ohne die zweite Halterung 36 liegt die Frischlufteinrichtung 20 als modulares Anbaugerät M vor, welches sich insbesondere an verschiedenen Straßenfertigertypen an einem daran vorgesehenen Fahrerbedienpult 7 mühelos an- und abbauen lässt, um den Fahrer mit Frischluft zu versorgen. Selbst wenn die jeweiligen Straßenfertigertypen geringfügig untereinander abweichende Fahrerbedienpulte 7 aufweisen, könnte die zweite Halterung 40 dementsprechend angepasst vorliegen, sodass der wesentliche Aufbau der Frischlufteinrichtung 20 als Standardanbaugerät baureihenübergreifend anwendbar ist.

Figur 8 zeigt die Frischlufteinrichtung 20 aus Figur 7 ohne Abdeckung 22. Figur 8 zeigt, dass auf einer der Filtereinheit 28 abgewandten Seite der Montageplatte 29 eine Gebläseeinheit 42 angeordnet ist. Die Gebläseeinheit 42 liegt als Radialventilator 43 vor.

Der Radialventilator 43 wird von auf der Montageplatte 29 positionierten Frischluftleitprofilen 44a, 44b umgeben. Ein mittels des Radialventilators 42 durch die Filtereinheit 28 axial angesaugter Luftstrom 45 (siehe Figur 11) wird von dem Radialventilator 43 als gefilterter Frischluftstrom 46a, 46b auf die in Figur 8 gezeigten beiden Strömungskanäle 47a, 47b radial verteilt. Der Frischluftstrom 46a, 46b wird durch die beiden Luftaustrittsöffnungen 23a, 23b in den Bereich des Fahrerbedienstands 5 des Straßenfertigers 2 austreten, wodurch die Luftqualität auf dem Bedienstand 5 für den Fahrer verbessert wird.

Gemäß Figur 8 sind die beiden Luftaustrittsöffnungen 23a, 23b in jeweiligen Plattenteilen 48a, 48b ausgebildet, die im zusammengebauten Zustand der Frischlufteinrichtung 20 in der Abdeckung 22 integriert sind (siehe Figur 11).

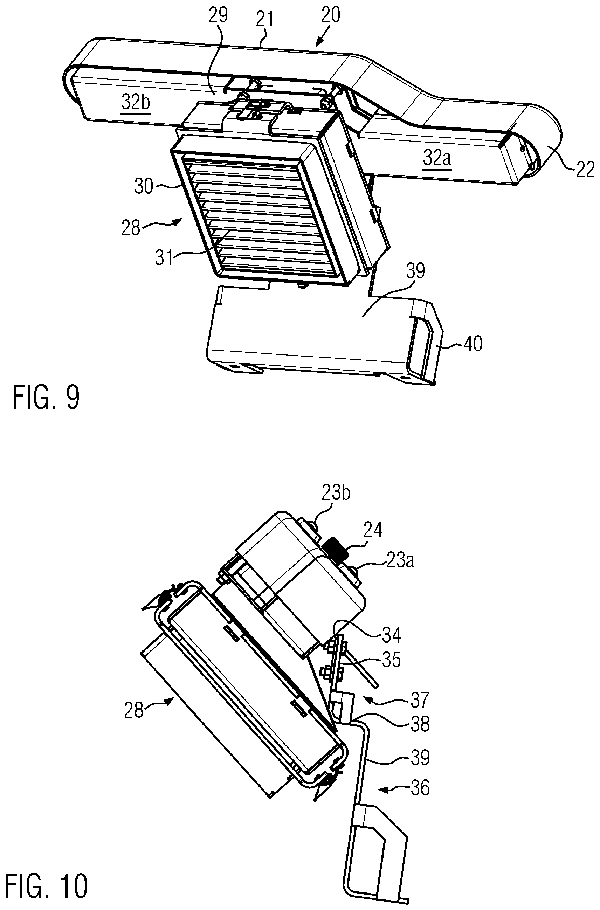

Figur 9 zeigt im Grunde genommen die Darstellung aus Figur 5 nur ohne Fahrerbedienpult 7. Figur 9 zeigt daher die Frischlufteinrichtung 20 in isolierter Darstellung von hinten.

Figur 10 zeigt im Grunde genommen die Darstellung aus Figur 6 nur ohne Fahrerbedienpult 7, wobei die Frischlufteinrichtung 20 in Seitenansicht gezeigt ist.

Figur 11 zeigt eine Schnittdarstellung der Frischlufteinrichtung 20. In Figur 11 ist zu sehen, dass das Filtergehäuse 30 sowohl ein erstes Filterelement 49a als auch ein zweites, weiteres Filterelement 49b aufnimmt. Die beiden Filterelemente 49a, 49b sind in Richtung des axialen Luftstroms 45 hintereinander, in Reihe angeordnet, um eine zusätzliche Filterwirkung zu erzeugen. Das zweite Filterelement 49b kann mittels einer am Filtergehäuse 30 befestigten Gehäuseausbaustufe 50 getragen werden. Die Gehäuseausbaustufe 50 ist in Figur 11 am Filtergehäuse 30 mittels Schnellverschlüssen 51a, 51b befestigt.

Gemäß Figur 11 weist die erste Halterung 33 außer dem außenliegenden Abschnitt 34 auch noch einen innenliegenden Abschnitt 52 auf, der an der Montageplatte 29 von dieser beabstandet befestigt ist. Zwischen dem innenliegenden Abschnitt 52 und der Montageplatte 29 ist ein Gebläseaufnahmeraum 53 ausgebildet, in welchem der Radialventilator 43 sitzt. Insbesondere zeigt Figur 11, dass der innenliegende Abschnitt 52 der ersten Halterung 33 zusammen mit der Montageplatte 29 und den Luftlenkprofilen 44a, 44b ein Lüftergehäuse 44 für den Radialventilator 43 ausbilden.

Ferner zeigt Figur 11, dass zwischen der Abdeckung 22 und dem innenliegenden Abschnitt 52 der ersten Halterung 33 ein Hohlraum 55 ausgebildet ist, in welchem elektronische Komponenten aufnehmbar sind.

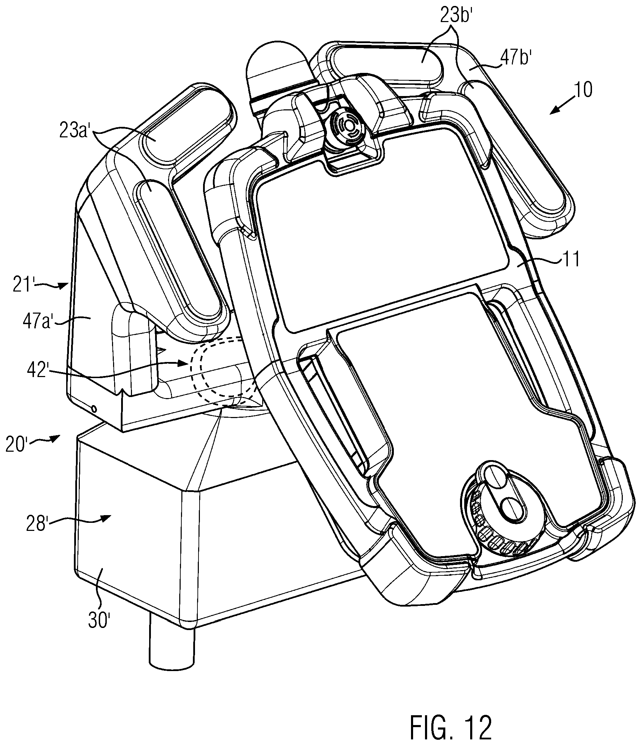

Figur 12 zeigt die Außenbedienkonsole 11 aus Figur 2 mit einer daran montierten Frischlufteinrichtung 20'. Die Frischlufteinrichtung 20' weist eine Filtereinheit 28' auf, die gemäß Figur 12 ein kastenförmiges Filtergehäuse 30' umfasst. Oberhalb des Filtergehäuses 30' ist eine mit dem Filtergehäuse 30' verbundene Luftausgabeeinheit 21' positioniert. In gestrichelter Form wird auf eine Gebläseeinheit 42' hingewiesen, die zwischen der Filtereinheit 28' und der Luftausgabeeinheit 21' sitzt. Die Gebläseeinheit 42' kann gemäß der Bauweise der Frischlufteinrichtung 20 komplett innerhalb der Luftausgabeeinheit 21' aufgenommen sein.

Ferner zeigt Figur 12, dass die Luftausgabeeinheit 21' zwei von der darin gelagerten Gebläseeinheit 42' wegführende Strömungskanäle 47a', 47b' ausbildet. Die beiden Strömungskanäle 47a', 47b' bilden Luftaustrittsöffnungen 23a', 23b' aus, aus welchen Frischluft für einen am Außenbedienstand 10 positionierten Bediener austritt.

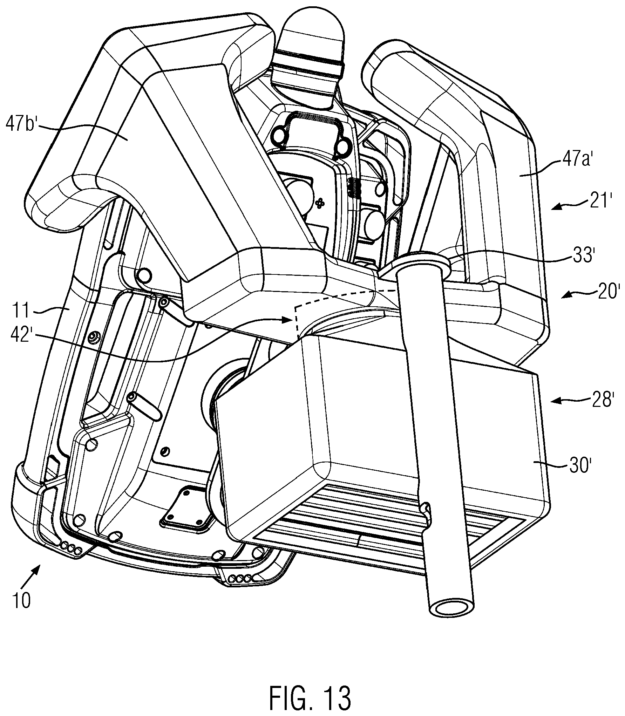

Figur 13 zeigt den Aufbau aus Figur 12 aus einer Perspektive von hinten. Die Frischlufteinrichtung 20' weist eine Halterung 33' auf, mittels welcher sie an einem Rohr 56 des Außenbedienstands 10 befestigt ist. Obwohl hier die Halterung 33' zum Befestigen der Frischlufteinrichtung 20' gezeigt wird, wäre es durchaus denkbar, die Frischlufteinrichtung 20' mit einer vergleichbaren Befestigungstechnik wie die Frischlufteinrichtung 20 zu montieren, d.h. unter Verwendung einer ersten und einer zweiten Halterung gemäß der ersten Halterung 33 und der zweiten Halterung 36. Auch die Befestigung der Gebläseeinheit 42' kann ähnlich wie die Befestigung der Gebläseeinheit 42 geschehen, insbesondere entsprechend dem Aufbau aus Figur 11.

In Figur 13 kann man gut sehen, dass die Frischlufteinrichtung 20' ein Anbaumodul M' für die Außenbedienkonsole 11 ausbildet, welches sich am Außenbedienstand 10 - wie die Frischlufteinrichtung 20 auf dem Fahrerbedienstand 5 - hervorragend anbauen, insbesondere nachrüsten lässt.

## Patentansprüche

1. Straßenbaumaschine (1), die in Form eines Straßenfertigers (2) oder eines Beschickerfahrzeugs (15) für einen Straßenfertiger (2) konfiguriert ist, **dadurch gekennzeichnet, dass** die Straßenbaumaschine (1) eine Frischlufteinrichtung (20, 20') für ein Fahrerbedienpult (7, 19) eines zumindest seitlich offen ausgebildeten Fahrerbedienstands der Straßenbaumaschine (1) oder für eine Außenbedienkonsole (11) der Straßenbaumaschine (1) aufweist, wobei die Frischlufteinrichtung (20, 20') mindestens eine Gebläseeinheit (42, 42') zum Erzeugen eines Luftstroms, mindestens eine Filtereinheit (28, 28') zum Filtern des mittels der Gebläseeinheit (42, 42') gebildeten Luftstroms und eine Luftausgabeeinheit (21, 21') umfasst, die mindestens eine Luftaustrittsöffnung (23a, 23b, 23a', 23b') für den gefilterten Luftstrom aufweist, und wobei die Frischlufteinrichtung (20, 20') als ein zur lösbaren Anbringung am Fahrerbedienpult (7, 19) oder an der Außenbedienkonsole (11) konfiguriertes, modulares Anbaugerät (M, M') ausgebildet ist.

2. Straßenbaumaschine nach Anspruch 1, **dadurch gekennzeichnet, dass** die Gebläseeinheit (42, 42') einen Radialventilator (43) oder einen Axialventilator aufweist.

3. Straßenbaumaschine nach Anspruch 1 oder 2, **dadurch gekennzeichnet, dass** die Gebläseeinheit (42, 42') mit einer Stromversorgungsquelle der Straßenbaumaschine (1) verbindbar ist und/oder dass die Frischlufteinrichtung (20, 20') mindestens einen eigenen Ackumulator für einen Betrieb der Gebläseeinheit (42, 42') aufweist.

4. Straßenbaumaschine nach einem der vorangehenden Ansprüche, **dadurch gekennzeichnet, dass** die Luftausgabeeinheit (21, 21') mindestens ein Bedienelement (24) zum Einstellen einer Drehzahl der Gebläseeinheit (42, 42') aufweist.

5. Straßenbaumaschine nach einem der vorangehenden Ansprüche, **dadurch gekennzeichnet, dass** die Filtereinheit (28, 28') der Gebläseeinheit (42, 42') in Strömungsrichtung vorgelagert positioniert ist und/oder dass die Filtereinheit (28, 28') ein Filtergehäuse (30, 30') zur Aufnahme mindestens eines austauschbaren Filterelements (49a, 49b) aufweist.

6. Straßenbaumaschine nach Anspruch 5, **dadurch gekennzeichnet, dass** die Filtereinheit (28, 28') für das Filtergehäuse (30, 30') mindestens eine Gehäuseausbaustufe (50) vorsieht, mittels welcher mindestens ein weiteres Filterelement (49a, 49b) aufnehmbar ist.

7. Straßenbaumaschine nach einem der vorangehenden Ansprüche, **dadurch gekennzeichnet, dass** die Luftausgabeeinheit (21) eine Montageplatte (29) aufweist, an welcher die Gebläseeinheit (42) und/oder die Filtereinheit (28) befestigt ist.

8. Straßenbaumaschine nach Anspruch 7, **dadurch gekennzeichnet, dass** die Luftausgabeeinheit (21) zur lösbaren Anbringung der Frischlufteinrichtung (20) am Fahrerbedienpult (7, 19) oder an der Außenbedienkonsole (11) eine erste Halterung (33) aufweist, die zusammen mit der Montageplatte (29) auch zur Ausbildung eines Lüftergehäuses (54) für die Gebläseeinheit (42) vorgesehen ist.

9. Straßenbaumaschine nach Anspruch 8, **dadurch gekennzeichnet, dass** die erste Halterung (33) mit einer am Fahrerbedienpult (7, 19) oder an der Außenbedienkonsole (11) befestigbaren zweiten Halterung (36) lösbar verbunden ist.

10. Straßenbaumaschine nach Anspruch 9, **dadurch gekennzeichnet, dass** eine zwischen der ersten Halterung (33) und der zweiten Halterung (36) gebildete Verbindungsstelle (37) oberhalb des Fahrerbedienpults (7, 19) oder der Außenbedienkonsole (11), für einen Bediener frei zugänglich gelagert ist.

11. Straßenbaumaschine nach einem der vorangehenden Ansprüche, **dadurch gekennzeichnet, dass** der mittels der Gebläseeinheit (42, 42') durch die Filtereinheit (28, 28') angesaugte Luftstrom von der Gebläseeinheit (42, 42') als gefilterter Frischluftstrom auf mindestens zwei, innerhalb der Luftausgabeeinheit (21, 21') ausgebildete Strömungskanäle (47a, 47b, 47a', 47b') verteilbar ist.

12. Straßenbaumaschine nach Anspruch 11, **dadurch gekennzeichnet, dass** die Strömungskanäle (47a, 47b) dazu ausgebildet sind, den von der Gebläseeinheit (42, 42') erzeugten Frischluftstrom in entgegengesetzten Richtungen zu jeweiligen Austrittsöffnungen (23a, 23b) der Luftausgabeeinheit (21) zu führen.

13. Straßenbaumaschine nach einem der Ansprüche 11 oder 12, **dadurch gekennzeichnet, dass** die Luftausgabeeinheit (21) zum Bedecken der Strömungskanäle (47a, 47b) eine Abdeckung (22) umfasst und/oder dass die jeweilige Luftaustrittsöffnung (23a, 23b) verstellbare Lamellen (25a, 25b) aufweist.

14. Straßenbaumaschine nach einem der vorangehenden Ansprüche, **dadurch gekennzeichnet, dass** die Frischlufteinrichtung (20, 20') derart am Fahrerbedienpult (7, 19) oder an der Außenbedienkonsole (11) montiert ist, dass die daran ausgebildete Luftaustrittsöffnung (23a, 23b, 23a', 23b') neben einer Bedienoberfläche (8, 12) des Fahrerbedienpults (7, 19) oder der Außenbedienkonsole (11) positioniert ist.

15. Straßenbaumaschine (1) nach einem der vorangehenden Ansprüche, **dadurch gekennzeichnet, dass** die Frischlufteinrichtung (20, 20') am Fahrerbedienpult (7, 19) des zumindest seitlich offen ausgebildeten Fahrerbedienstands (5, 18) oder an der Außenbedienkonsole (11) des Außenbedienstands (10) der Straßenbaumaschine (1) befestigt ist.

## Claims

1. Road making machine (1) which is configured in the form of a road finishing machine (2) or a charger vehicle (15) for a road finishing machine (2) , **characterised in that** the road making machine (1) comprises a fresh air means (20, 20') for a driver control panel (7, 19) of a driver control platform of the road making machine (1) that is open at least at its side or for an external control console (11) of a road making machine (1), wherein the fresh air means (20, 20') comprises at least one blower unit (42, 42') for generating an air flow, at least one filter unit (28, 28') for filtering the air flow formed by means of the blower unit (42, 42'), and an air discharge unit (21, 21') including at least one air outlet opening (23a, 23b, 23a', 23b') for the filtered air flow, and wherein the fresh air means (20, 20') is designed as a modular attachment apparatus (M, M') configured to be removably attached to the driver control panel (7, 19) or to the external control console (11).

2. Road making machine according to claim 1, **characterized in that** the blower unit (42, 42') includes a centrifugal fan (43) or an axial-flow fan.

3. Road making machine according to claim 1 or 2, **characterized in that** the blower unit (42, 42') can be connected with a power supply source of the road making machine (1), and/or the fresh air means (20, 20') includes at least one separate accumulator for an operation of the blower unit (42, 42').

4. Road making machine according to one of the preceding claims, **characterized in that** the air discharge unit (21, 21') includes at least one operating element (24) for adjusting a speed of the blower unit (42, 42').

5. Road making machine according to one of the preceding claims, **characterized in that** the filter unit (28, 28') is positioned upstream of the blower unit (42, 42') seen in the direction of flow, and/or the filter unit (28, 28') includes a filter housing (30, 30') for receiving at least one replaceable filter element (49a, 49b).

6. Road making machine according to claim 5, **characterized in that** the filter unit (28, 28') provides at least one housing expansion stage (50) for the filter housing (30, 30') by means of which at least one further filter element (49a, 49b) can be received.

7. Road making machine according to one of the preceding claims, **characterized in that** the air discharge unit (21) includes a mounting plate (29) to which the blower unit (42) and/or the filter unit (28) is fastened.

8. Road making machine according to claim 7, **characterized in that** the air discharge unit (21) includes a first mounting (33) for removably attaching the fresh air means (20) at the driver control panel (7, 19) or at the external control console (11), the mounting being also provided, together with the mounting plate (29), for forming a fan housing (54) for the blower unit (42).

9. Road making machine according to claim 8, **characterized in that** the first mounting (33) is removably connected with a second mounting (36) that can be fastened to the driver control panel (7, 19) or the external control console (11).

10. Road making machine according to claim 9, **characterized in that** a connection point (37) formed between the first mounting (33) and the second mounting (36) is mounted to be freely accessible by an operator above the driver control panel (7, 19) or the external control console (11).

11. Road making machine according to one of the preceding claims, **characterized in that** the air flow sucked in through the filter unit (28, 28') by means of the blower unit (42, 42') can be distributed by the blower unit (42, 42') as a filtered fresh air flow to at least two flow channels (47a, 47b, 47a', 47b') formed within the air discharge unit (21, 21').

12. Road making machine according to claim 11, **characterized in that** the flow channels (47a, 47b) are designed to guide the fresh air flow generated by the blower unit (42, 42') in opposite directions to respective outlet openings (23a, 23b) of the air discharge unit (21).

13. Road making machine according to one of claims 11 or 12, **characterized in that** the air discharge unit (21) comprises a cover (22) for covering the flow channels (47a, 47b), and/or the respective air outlet opening (23a, 23b) includes adjustable louvers (25a, 25b).

14. Road making machine according to one of the preceding claims, **characterized in that** the fresh air means (20, 20') is mounted to the driver control panel (7, 19) or to the external control console (11) such that the air outlet opening (23a, 23b, 23a', 23b') formed thereat is positioned next to an operating surface (8, 12) of the driver control panel (7, 19) or the external control console (11).

15. Road making machine according to one of the previous claims, **characterized in that** the fresh air means (20, 20') is fastened to the driver control console (7, 19) of the driver control platform (5, 18) which is designed to be open at least at the side, or to the external control console (11) of the external control platform (10) of the road making machine (1).

## Revendications

1. Engin de construction routière (1) configuré sous la forme d'un finisseur de route (2) ou d'un véhicule d'alimentation (15) pour un finisseur de route (2), **caractérisé en ce que** l'engin de construction routière (1) comporte un dispositif d'air frais (20, 20') pour un pupitre de commande de conducteur (7, 19) d'un poste de commande de conducteur de l'engin de construction routière (1) réalisé de manière ouverte au moins latéralement ou pour une console de commande extérieure (11) de l'engin de construction routière (1), où le dispositif d'air frais (20, 20') comprend au moins une unité de soufflerie (42, 42') pour générer un flux d'air, au moins une unité de filtrage (28, 28') pour filtrer le flux d'air formé au moyen de l'unité de soufflerie (42, 42') et une unité de décharge d'air (21, 21'), qui comporte au moins une ouverture de sortie d'air (23a, 23b, 23a', 23b') pour le flux d'air filtré, et où le dispositif d'air frais (20, 20') est réalisé sous forme d'un accessoire modulaire (M, M') réalisé pour être installé de manière amovible au niveau du pupitre de commande de conducteur (7, 19) ou de la console de commande extérieure (11).

2. Engin de construction routière selon la revendication 1, **caractérisé en ce que** l'unité de soufflerie (42, 42') comporte un ventilateur radial (43) ou un ventilateur axial.

3. Engin de construction routière selon la revendication 1 ou 2, **caractérisé en ce que** l'unité de soufflerie (42, 42') peut être connectée à une source d'alimentation électrique de l'engin de construction routière (1) et/ou **en ce que** le dispositif d'air frais (20, 20') comporte au moins un accumulateur propre pour un fonctionnement de l'unité de soufflerie (42, 42').

4. Engin de construction routière selon l'une des revendications précédentes, **caractérisé en ce que** l'unité de décharge d'air (21, 21') comporte au moins un élément de commande (24) pour régler une vitesse de rotation de l'unité de soufflerie (42, 42').

5. Engin de construction routière selon l'une des revendications précédentes, **caractérisé en ce que** l'unité de filtrage (28, 28') est située en amont de l'unité de soufflerie (42, 42') dans le sens de l'écoulement et/ou **en ce que** l'unité de filtrage (28, 28') comporte un boîtier de filtre (30, 30') destiné à recevoir au moins un élément de filtre échangeable (49a, 49b).

6. Engin de construction routière selon la revendication 5, **caractérisé en ce que** l'unité de filtrage (28, 28') prévoit au moins un étage d'extension de boîtier (50) pour le boîtier de filtre (30, 30'), au moyen duquel au moins un autre élément de filtre (49a, 49b) peut être logé.

7. Engin de construction routière selon l'une des revendications précédentes, **caractérisé en ce que** l'unité de décharge d'air (21) comporte une plaque de montage (29) au niveau de laquelle est fixée l'unité de soufflerie (42) et/ou l'unité de filtrage (28).

8. Engin de construction routière selon la revendication 7, **caractérisé en ce que** l'unité de décharge d'air (21) comporte, pour l'installation amovible du dispositif d'air frais (20) au niveau du pupitre de commande du conducteur (7, 19) ou de la console de commande extérieure (11), un premier support (33) qui, avec la plaque de montage (29), est également conçu pour former un boîtier de ventilateur (54) pour l'unité de soufflerie (42).

9. Engin de construction routière selon la revendication 8, **caractérisé en ce que** le premier support (33) est relié de manière amovible avec un deuxième support (36) pouvant être fixé au pupitre de commande de conducteur (7, 19) ou à la console de commande extérieure (11).

10. Engin de chantier routier selon la revendication 9, **caractérisé en ce qu'**un point de jonction (37) formé entre le premier support (33) et le deuxième support (36) est logé de manière librement accessible à un opérateur, au-dessus du pupitre de commande de conducteur (7, 19) ou de la console de commande extérieure (11).

11. Engin de construction routière selon l'une des revendications précédentes, **caractérisé en ce que** le flux d'air aspiré au moyen de l'unité de soufflerie (42, 42') à travers l'unité de filtrage (28, 28') peut être réparti par l'unité de soufflerie (42, 42') en tant que flux d'air frais filtré entre au moins deux canaux d'écoulement (47a, 47b, 47a', 47b') réalisés à l'intérieur de l'unité de décharge d'air (21, 21').

12. Engin de construction routière selon la revendication 11, **caractérisé en ce que** les canaux d'écoulement (47a, 47b) sont réalisés pour guider le flux d'air frais généré par l'unité de soufflerie (42, 42') dans des directions opposées vers des ouvertures de sortie respectives (23a, 23b) de l'unité de décharge d'air (21).

13. Engin de construction routière selon l'une des revendications 11 ou 12, **caractérisé en ce que** l'unité de décharge d'air (21) comporte un couvercle (22) pour recouvrir les canaux d'écoulement (47a, 47b) et/ou **en ce que** l'ouverture de sortie d'air respective (23a, 23b) comprend des lamelles réglables (25a, 25b).

14. Engin de construction routière selon l'une des revendications précédentes, **caractérisé en ce que** le dispositif d'air frais (20, 20') est monté au niveau du pupitre de commande du conducteur (7, 19) ou de la console de commande extérieure (11) de telle manière que l'ouverture de sortie d'air (23a, 23b, 23a', 23b') réalisée sur celui-ci est positionnée à côté d'une surface de commande (8, 12) du pupitre de commande du conducteur (7, 19) ou de la console de commande extérieure (11).

15. Engin de construction routière (1) selon l'une des revendications précédentes, **caractérisé en ce que** le dispositif d'air frais (20, 20') est fixé au niveau du pupitre de commande du conducteur (7, 19) du poste de commande du conducteur (5, 18) réalisé de manière ouverte au moins latéralement ou de la console de commande extérieure (11) du poste de commande extérieur (10) de l'engin de construction routière (1).
